(19) Europäisches Patentamt
European Patent Office
Office européen des brevets

(11) EP 3 808 802 A1

(12) **EUROPEAN PATENT APPLICATION**

(43) Date of publication:
**21.04.2021 Bulletin 2021/16**

(51) Int Cl.:
***C08K 3/04*** *(2006.01)*

(21) Application number: **19203067.4**

(22) Date of filing: **14.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **MERCX, Frans**
  **4612 PX Bergen op Zoom (NL)**
- **GOOSSENS, Johannes Gerardus Petrus**
  **4612 PX Bergen op Zoom (NL)**
- **VAN ERP, Tim**
  **4612 PX Bergen op Zoom (NL)**
- **HAGENAARS, Arno**
  **4612 PX Bergen op Zoom (NL)**
- **RAMAKRISHNAN, Vaidyanath**
  **4612 PX Bergen op Zoom (NL)**

(74) Representative: **Elzaburu S.L.P.**
**Miguel Angel 21, 2nd floor**
**28010 Madrid (ES)**

(54) **COMPOSITIONS OF IMPROVED THROUGH-PLANE THERMAL CONDUCTIVITY USING FOAM INJECTION MOLDING WITH CORE-BACK TECHNOLOGY**

(57) In various aspects, the disclosure relates to a polymer composition comprising: from about 5 wt. % to about 99 wt. % of a polymer base resin; from about 15 wt. % to about 70 wt. % of a thermally conductive filler, wherein the thermally conductive filler has an aspect ratio greater than 1:1; and one or more of from about 0.01 to about 5 wt. % of a nanostructured fluoropolymer or from about 0.1 wt. % to about 15 wt. % of a polymer compatibilizer, wherein the combined weight percent value of all components does not exceed 100 wt. %, and all weight percent values are based on the total weight of the composition. A foamed, molded article the polymer composition exhibits a through-plane thermal conductivity of at leastl.5W/mK when tested in accordance with ISO 22007-2.

EP 3 808 802 A1

## Description

TECHNICAL FIELD

The disclosure concerns foamed and filled thermoplastic compositions exhibiting improved thermal conductivity.

BACKGROUND

The development of improved thermoplastic compositions, such as reinforced or filled compositions, with robust physical and mechanical properties presents significant technical challenges. Establishing an appropriate balance of components and processing conditions for a desired application of thermally conductive plastic materials is explored herein. Thermally conductive thermoplastics typically include a polymer resin matrix with conductive fillers (such as beads, fibers, or platelets, etc.). To achieve high thermal conductivity, anisotropic filers are generally preferred. Anisotropic fillers may describe fillers that exhibit a particular physical property or behavior when observed or measured in a certain orientation or direction. The use of such anisotropic fillers however inherently may lead to anisotropic thermal conductivity upon processing of the resulting composition. In general, upon processing like injection molding or extrusion, this anisotropic thermal conductivity yields high in-plane and low through-plane conductivity. Values for in-plane and through-plane thermal conductivity may determine whether a given thermoplastic composition is more suitable or less suitable for certain applications, for example, as a heat exchanger. The present disclosure addresses these considerations as well as others in the art.

SUMMARY

In various aspects, the present disclosure relates to a polymer composition comprising: from about 5 wt. % to about 99 wt. % of a polymer base resin, from about 15 wt. % to about 70 wt. % of a thermally conductive filler, wherein the filler has an aspect ratio greater than 1:1; and one or more of from about 0.01 to about 5 wt. % of a nanostructured fluoropolymer or from about 0.1 wt. % to about 15 wt. % of a polymer compatibilizer, wherein the combined weight percent value of all components does not exceed 100 wt. %, and all weight percent values are based on the total weight of the composition. A foamed, core back opened molded article of the polymer composition may exhibit a thermal conductivity of at least 1.5 W/mK when tested in accordance with ISO 22007-2.

In further aspects, the present disclosure relates to a composition formed from a method comprising: combining to form a blend, from about 5 wt. % to about 99 wt. % of a polymer base resin, from about 5 wt. % to about 70 wt. % of a thermally conductive filler, and one or more of from about 0.01 to about 5 wt. % of a nanostructured fluoropolymer or from about 0.1 wt. % to about 15 wt. % of a polymer compatibilizer, injection molding the blend to form a molded blend; foaming the molded blend; and performing a mold opening process to form a larger mold cavity to provide a foamed article.

In another aspect, the disclosure concerns an article prepared according to the methods of forming a thermoplastic composition as disclosed herein.

BRIEF DESCRIPTION OF THE DRAWINGS

The following is a brief description of the drawings wherein like elements are numbered alike and which are exemplary of the various embodiments described herein. In the drawings:

FIG. 1 shows an example method for a core-back process of injection molding useful when applied to the compositions disclosed herein.
FIG. 2 shows an injection molding barrel/screw constructed according to the principles of the disclosure.
FIG. 3A shows a schematic representation of reorientation of conductive fillers by foam expansion or cell growth where thermally conductive filler are distributed throughout a polymer resin matrix; FIG. 3B shows a cell of foamed gas; and FIG. 3C shows cell continuing to increase in size.
FIG. 4 shows a suitable mold core-back tool configured to receive an injection polymer melt.
FIG. 5A shows a schematic diagram of mold filling; FIG. 5B shows cell nucleation and cell growth; and FIG. 5C shows opening of a mold portion so that cells become elongated.
FIG. 6 presents a detailed example of forming a foamed, molded part according to the present disclosure.
FIG. 7 shows Table 2 which presents formulations of samples S1 through S8.
FIG. 8 shows Table 3 which presents the extrusion profile and compounding conditions for forming samples.
FIG. 9 shows Table 4 which presents the core back ratio, thermal conductivity, and foam quality for samples S1 through S8.
FIG. 10 shows a graphical representation of the through-plane thermal conductivity as a function of the core back ratio.

DETAILED DESCRIPTION

Thermally conductive compositions generally comprise a polymer resin matrix with conductive fillers dispersed therein. To achieve high thermal conductivity in the through-plane direction (i.e., through-plane thermal conductivity, which is useful for heat exchangers) a very highly filled systems is desired. A highly filled polymer resin system may have upwards of 50 weight percent filler based on the total weight of the resin system. Additionally, to achieve high thermal conductivity, anisotropic fillers are conventionally preferred. Anisotropic fillers however may lead to anisotropic thermal conductivity when the composition is subjected to processing such as during injection molding or extrusion. More specifically, the use of such fillers inherently causes the thermal conductivity to display anisotropy such that the highest thermal conductive values are observed in the direction of processing flow direction and substantially lower thermal conductivity in the through-plane direction. Thus, anisotropic fillers may yield high in-plane thermal conductivity, through-plane conductivity may be lower. Currently, the highest through-plane conductivity of 1.0-2.5 W/mK is reported in very highly filled systems (greater than 50 wt.% filler loading). A 3-5 W/mK through-plane conductivity has not been reached by state-of-the-art material compounds.

The present disclosure demonstrates that by applying an advanced processing method, the through-plane thermal conductivity of a molded article may be significantly improved. Such an improvement may be achieved by using a modified foam injection molding process. A suitable filled polymer resin and foaming agent are co-injected into a mold cavity, followed by mold opening to increase sample thickness. The process may be generally referred to as core-back, breathing, and decompression. The use of foaming agents combined with mold-opening during filling of the product enables microstructural changes that ultimately improve properties of the molded article such as thermal conductivity. These microstructural changes may include re-orientation and re-distribution of conductive filler fibers in the direction of sample thickness, creating an enhanced filler network. This re-orientation and/or enhanced network may thereby contribute to an improved through-plane thermal conductivity.

In further aspects, the resulting quality of microstructures in the foamed product may vary according to the characteristics of the components of the filled polymer composition. Foam quality may relate to foam cell size distribution. A larger cell size distribution may be represented by substantially large cells that expand into gaps/cracks and are more open than closed cell structures. This larger cell size distribution may lead to poorer mechanical properties. The present disclosure provides specific formulations that, in combination with the disclosed modified injection molding core back process, may yield improved foam quality as well as improved thermal conductivity. More specifically, the disclosed molded articles may exhibit substantially uniform or more uniform foamed microstructures with improved mechanical properties, while maintaining higher through-plane thermal conductivity compared to a substantially similar material processed using standard injection molding techniques and conventionally selected components. The present disclosure optimizes the particle size and/or aspect ratio of the thermally conductive filler and incorporates additional additives including a nanostructured fluoropolymer and a polymer compatibilizer to further improve through plane thermal conductivity and foam quality.

In various aspects, the filled thermoplastic composition is subjected to a foaming injection molding process. The disclosed method may comprise combining a polymer base resin and a thermally conductive filler to form a blend and introducing the blend to a molding process. The molding process may comprise an injection molding process. According to various aspects of the present disclosure, a filled thermoplastic resin may be subjected to a molding process, such as injection molding, to form the desired article. As shown in FIG. 1, a process may comprise filled thermoplastic resin pellets being injection molded at 102. A foaming agent may be co-injected in the cavity at 104 to enable nucleation and cell growth of the foamed composition. Foaming is followed by mold opening to increase sample thickness 108. For illustrative purposes, certain injection molding and foaming processes are presented herein. FIG. 2 shows an injection molding barrel/screw constructed according to the principles of the disclosure.

As shown in FIG. 2, an injection molding barrel/screw 200 may include a hopper 228. Pellets of fiber reinforced thermoplastics may be supplied by the hopper 228 to the injection molding barrel/screw 200 together with a gas (such as a blowing agent) from a gas source 224. During plasticizing (or melting) of the pellets in the injection molding barrel/screw 200, the gas may dissolve gradually in the melt.

The injection molding barrel/screw 200 may include a cylinder 206 maintaining a screw 208. The screw 208 may further include a motor or the like (not shown) for moving the screw 208 to advance the material. The injection molding barrel/screw 200 may further include a seal 204, an airlock 202 and a shutoff valve 210 configured to maintain gas pressure within the cylinder 206. Other constructions associated with the injection molding barrel/screw 200 are contemplated to maintain gas pressure within the cylinder 206 as well.

According to various aspects of the present disclosure, a controller may be useful for operation of the injection molding machine. For example, the controller may receive sensor outputs from a temperature or pressure sensor from any part of the injection molding apparatus described herein. The controller may also include a processor and an input/output port that is configured to receive signals from any suitably attached electronic device and transmit the signals to process. These signals may be from the temperature and/or pressure sensors.

In various examples, a controller and input/output I/O port may be configured to control operation of the core-back tool (400, referring to FIG. 4) and receive signals from the core-back tool 400. These signal includes signals from a temperature sensor sensing temperature from any part of the core-back tool 400 and associated system, a pressure sensor sensing pressure from a part of the core-back tool 400 and associated system, a position sensor sensing position of a part of the core-back tool 400 and associated system, and the like. The controller may control operation of the core-back tool 400 including the configurations.

During plasticizing of the polymer, foaming of the polymer melt may be enabled via introduction of an inert gas into the melt. Foaming may proceed according to a number of methods well known in the art. In some examples, foaming may proceed using a physical blowing agent such as carbon dioxide, nitrogen, or isobutane. In further examples, foaming may proceed using a chemical blowing agent that decomposes generating carbon dioxide. Physical foaming may proceed where the polymer is melted and a super critical fluid (SCF) is injected into the melt at a high pressure (for example, about -200 bar). The SCF may dissolve into the polymer melt in a single phase. With chemical foaming, a chemical blowing agent may be combined with the polymer during the injection molding process. As the temperature increases, the chemical blowing agent decomposes and releases carbon dioxide gas into the polymer melt. An example of a blowing agent process includes the use of Mucell™, where a supercritical gas is used to impart micro-foaming.

After injection of the filled thermoplastic melt with the desired foamed gas, a pressure drop may occur in the injection molding system. Such a pressure drop allows for nucleation and cell growth within the polymer resin melt. FIGS. 3A-3C presents a schematic representation of reorientation of conductive fillers by the foam expansion or cell growth. See, A. Ameli et al., CARBON 71(2014) 206 - 217. As shown in FIG. 3A, filaments of thermally conductive filler are distributed throughout a polymer resin matrix. In FIG. 3B, a cell comprised of foamed gas has formed within the polymer resin matrix and the filaments of thermally conductive filler are shown dispersed thereabout. In FIG. 3C, the cell continues to increase. The cell growth and nucleation generate an internal force within the polymer melt causing a reorientation of the thermally conductive fillers. The re-orientation may proceed in such way to promote a 3D network of the fillers.

FIG. 4 presents a suitable mold core-back tool configured to receive the injection polymer melt according to the principles of present disclosure. In particular, FIG. 4 shows a mold core-back tool 400 in a first position 1 and a second position 2. Core-back, also known as breathing or decompression molding, may refer to a controlled opening of the core-back tool 400 from its initial thickness to the desired end thickness. The core-back tool 400 may include a first mold portion 402 and a second mold portion 404. Additional mold components associated with the core-back tool 400 may be utilized as well.

During the molding process that is described in greater detail herein, the first mold portion 402 and the second mold portion 404 of the core-back tool 400 may be in the first position 1. A part to be molded 406 may be introduced to a mold cavity 408 that is sized based on the first configuration 1. During the molding process, the first mold component 402 and the second mold component 404 of the core-back tool 400 may be reconfigured to the second position 2. The second position may correspond to a retracting motion of the first mold portion or a "mold opening" as referred to herein. Thereafter, the part to be molded 406 may be subjected to a mold cavity 408 that is sized based on the second configuration 2. For example, the mold cavity 408 may be larger in one dimension in the second configuration 2 in comparison to the first configuration 1. In one aspect, the mold cavity 408 may be larger in two dimensions in the second configuration 2 in comparison to the first configuration 1. In one aspect, the mold cavity 408 may be larger in three dimensions in the second configuration 2 in comparison to the first configuration 1. In some examples, mold opening may proceed to increase the size of the mold cavity at least 10 %, 20 %, 30 %, 40 %, 50 %, 60 %, 70 %, 80 %, 90 %, 100 %, 110 %, or greater, by volume. In a specific example, mold opening may proceed from 3 mm to a thickness of 5 mm, corresponding to a core-back of 67%.

Accordingly, in various examples, upon reaching a certain volume fill for the mold cavity (about 99%), a mold portion is retracted to create a larger mold cavity, resulting in an increase of the thickness of the molded part within the cavity. As an example, the mold opening from the first position 1 to the second position 2 as described herein may proceed in a through-plane direction such that a relative spacing between the first mold portion 402 and the second mold portion 404 has increased. Mold-opening enables expansion of the foam therein which facilitates preferred orientation of conductive fillers in the through-plane direction. FIGS. 5A-5C presents a schematic diagram that illustrates the mold filling, foaming, and core back processes. In FIG. 5A, the polymer melt enters and fills a volume of the mold, which is in a direction may be referred to as an "in-plane" direction. During foaming, as described above, cell nucleation and cell growth occur in FIG. 5B. With the core-back, as a mold portion is opened in a through-plane direction, the cells may become elongated in FIG. 5C. Moreover, filaments of fiber filler are reoriented.

FIG. 6 details an example of a process of constructing a foamed, molded part according to the principles of the disclosure. In particular, FIG. 6 shows a process 600 for producing molded articles exhibiting improved through-plane thermal conductivity. In step 602, fiber filled thermoplastics pellets are fed into a hopper 228 (referring to FIG. 2). Thereafter, in step 604, the fiber reinforced thermoplastics pellets are fed from the hopper 228 through an airlock 202. As shown in step 606, the airlock 202 may be closed.

As described in step 608, the fiber reinforced thermoplastics pellets are fed from the airlock 202 to the injection

molding barrel/screw 200 together with a suitable gas. As described in step 610, during plasticizing in the injection molding barrel/screw 200, the gas may dissolve gradually in the melt. Additionally, the disclosed process may further benefit from having no and/or limited abrasive mixing elements in the injection molding barrel/screw 200 to further reduce fiber breakage.

In the process 600, the injection molding barrel/screw 200 (or other portion of a plasticizing unit of the injection molding machine) may be pressurized with the gaseous blowing agent at step 610. For example, the pressurizing is performed in more than 50%, more than 70%, or more than 90% to 100%, of the plasticizing unit. To prevent the loss of the blowing agent at the end of the screw, a seal 204 may be arranged between the screw 208 and the cylinder 206. The injection molding barrel/screw 200 and/or plasticizing unit itself may be sealed with the airlock 202 that is mounted between the injection molding barrel/screw 200 and the hopper 228. The injection molding barrel/screw 200 and/or plasticizing unit may be equipped with a shutoff valve 210 and a position control for the screw 208 to keep the blowing-agent-loaded melt under pressure until it is injected into the core-back tool 400. The injection molding barrel/screw 200 may be implemented as a 3-zone screw without any abrasive elements for dissolving the gas into the melt.

At step 612, the melt having dissolved gas is introduced to the mold cavity in a first configuration and melt is allowed to fill the mold cavity to at least about 99 % of its volume. Thus, at this step, the mold cavity 408 (FIG. 4) of the mold portions 402, 404 may be in the first configuration 1 and may be filled up to about 99% of volume. In one aspect, a packing pressure is applied. This may limit the dissolved gas from expanding the part 406, thus limiting the formation of foam. In one aspect, no packing pressure is applied.

As described in step 614, the mold cavity 408 of the core-back tool 400 may be resized and the mold opened by placing the mold in the second configuration 2 by retracting a mold portion in the through plane direction. While in the second configuration 2, the dissolved gas within the injected material may be allowed to at least partially expand to form foam within the part 406. The result is a molded, foamed part exhibiting improved through-plane thermal conductivity when compared to a part formed via conventional injection molding and foaming processes.

The disclosed processes may further comprise additional parameters to facilitate molding and/or foaming. For example, the further treatment may include heat-cool technology. Heat-cool technology may be applied to facilitate high mold temperature during filling and foam expansion as described herein. Via heat-cool technology, a higher temperature profile may promote a lower melt viscosity of the polymer melt. The lower melt viscosity may facilitate the foam expansion process and/or presents premature freezing or solidification of the polymer melt. An example of a useful heat-cool technology may comprise a water temperature controller that can both heat and cool an injection mold within a single molding cycle.

As provided herein, components selected for the filled polymer resin may determine the thermal conductivity and foam quality of the molded part. Selection of a polymer base resin, thermally conductive filler, and additional additives may affect the foregoing properties.

In various aspects, the polymer base resin may comprise a thermoplastic resin. The thermoplastic resin may comprise polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LCP), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof. The thermoplastic resin can also include thermoplastic elastomers such as polyamide and polyester based elastomers. The base substrate can also include blends and/or other types of combination of resins described above.

The polymer base resin of the present disclosure may include a polyamide resin, or a combination of polyamide resins. Polyamide resins useful in the practice of the present disclosure include a generic family of resins referred to as nylons, which may be characterized by the presence of an amide group (-C(O)NH-). Polyamides, including also polyphthalamides (PPA), suitable for use in the present method include but are not limited to polyamide-6, polyamide-6,6, polyamide-4,6, polyamide 9T, polyamide 10T, polyamide-11, polyamide-12, polyamide-6,10, polyamide-6,12, polyamide 6/6,6, polyamide-6/6,12, polyamide MXD6, polyamide-6T, polyamide-6I, polyamide-6/6T, polyamide-6/6I, polyamide-6, 6/6T, polyamide-6,6/6I, polyamide- 6/6T/6I, polyamide-6,6/6T/6I, polyamide-6/12/6T, polyamide-6,6/12/6T, polyamide-6/12/6I, polyamide-6,6/12/6I, and combinations thereof. Nylon-6 and nylon-6,6 represent common polyamides and are available from a variety of commercial sources. In some aspects, polyamides having viscosity of up to about 400 ml/g can be used, or polyamides having a viscosity of about 90 to about 350 ml/g, or polyamides having a viscosity of about 110 to about 240 ml/g, as measured in a 0.5 wt% solution in 96 wt% sulfuric acid in accordance with ISO 307.

Polycarbonates, and combinations including thereof, may also be used as the polymer base resin. As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification.

In certain aspects the polycarbonate polymer is a Bisphenol-A polycarbonate, a high molecular weight (Mw) high flow/ductile (HFD) polycarbonate, a low Mw HFD polycarbonate, or a combination thereof.

The terms "BisA," "BPA," or "bisphenol A," which can be used interchangeably, as used herein refers to a compound having a structure represented by formula (1):

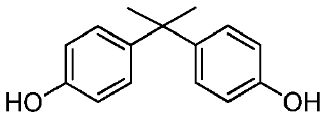
(1)

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In addition to the polycarbonates described above, combinations of the polycarbonate with other thermoplastic polymers, for example combinations of homopolycarbonates, copolycarbonates, and polycarbonate copolymers with polyesters, can be used. Useful polyesters include, for example, poly(alkylene alkylene terephthalates), poly(alkylene arylates), liquid crystalline polyesters, and polyester copolymers.

Useful polyesters can include aromatic polyesters, poly(alkylene esters) including poly(alkylene arylates), and poly(cycloalkylene diesters). In an aspect, useful aromatic polyesters can include poly(isophthalate-terephthalate-resorcinol) esters, poly(isophthalate-terephthalate-bisphenol A) esters, poly[(isophthalate-terephthalate-resorcinol) ester-co-(isophthalate-terephthalate-bisphenol A)] ester, or a combination including at least one of these. Also contemplated are aromatic polyesters with a minor amount, e.g., 0.5 to 10 wt. %, based on the total weight of the polyester, of units derived from an aliphatic diacid and/or an aliphatic polyol to make copolyesters. Examples of poly(alkylene terephthalates) include poly(ethylene terephthalate) (PET), poly(1,4-butylene terephthalate) (PBT), and poly(n-propylene terephthalate) (PPT). Also useful are poly(alkylene naphthoates), such as poly(ethylene naphthanoate) (PEN), and poly(butylene naphthanoate) (PBN). A specifically useful poly(cycloalkylene diester) is poly(1,4-cyclohexanedimethylene terephthalate) (PCT). Combinations including at least one of the foregoing polyesters can also be used.

Copolymers including alkylene terephthalate repeating ester units with other ester groups can also be useful. Specifically useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer includes greater than or equal to 50 mol% of poly(ethylene terephthalate), and abbreviated as PCTG where the polymer includes greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexanedimethanol-1,4-cyclohexanedicarboxylate) (PCCD).

The polymer base resin can further include a polysiloxane-polycarbonate copolymer, also referred to as a poly(siloxane-carbonate). The polydiorganosiloxane (also referred to herein as "polysiloxane") blocks include repeating diorganosiloxane units as in formula (2)

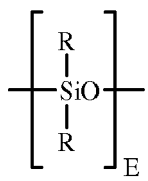
(2)

wherein each R is independently a $C_{1-13}$ monovalent organic group. For example, R can be a $C_1$-$C_{13}$ alkyl, $C_1$-$C_{13}$ alkoxy, $C_2$-$C_{13}$ alkenyl, $C_2$-$C_{13}$ alkenyloxy, $C_3$-$C_6$ cycloalkyl, $C_3$-$C_6$ cycloalkoxy, $C_6$-$C_{14}$ aryl, $C_6$-$C_{10}$ aryloxy, $C_7$-$C_{13}$ arylalkyl, $C_7$-$C_{13}$ aralkoxy, $C_7$-$C_{13}$ alkylaryl, or $C_7$-$C_{13}$ alkylaryloxy. The foregoing groups can be fully or partially halogenated with fluorine, chlorine, bromine, or iodine, or a combination thereof. In an aspect, where a transparent polysiloxane-polycarbonate is desired, R is unsubstituted by halogen. Combinations of the foregoing R groups can be used in the same copolymer.

A combination of a first and a second (or more) polycarbonate-polysiloxane copolymers can be used, wherein the average value of E of the first copolymer is less than the average value of E of the second copolymer.

In an aspect, the polydiorganosiloxane blocks are of formula (3)

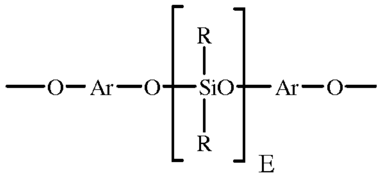

(3)

wherein E is as defined above; each R can be the same or different, and is as defined above; and Ar can be the same or different, and is a substituted or unsubstituted $C_6$-$C_{30}$ arylene, wherein the bonds are directly connected to an aromatic moiety. Ar groups in formula (3) can be derived from a $C_6$-$C_{30}$ dihydroxyarylene compound, for example a dihydroxyarylene compound. Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations including at least one of the foregoing dihydroxy compounds can also be used.

Transparent polysiloxane-polycarbonate copolymers can include carbonate units (1) derived from bisphenol A, and repeating siloxane or a combination including at least one of the foregoing, wherein E has an average value of 4 to 50, 4 to 15, specifically 5 to 15, more specifically 6 to 15, and still more specifically 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(siloxane-carbonate) copolymers.

The polysiloxane-polycarbonate copolymers can include 50 wt. % to 99 wt. % of carbonate units and 1 wt. % to 50 wt. % siloxane units. Within this range, the polyorganosiloxane-polycarbonate copolymer can include 70 wt. %, to 98 wt. %, more specifically 75 wt. % to 97 wt. % of carbonate units and 2 wt. % to 30 wt. %, more specifically 3 wt. % to 25 wt. % siloxane units.

In one aspect, the polysiloxane-polycarbonate copolymer can include 10 wt% or less, specifically 6 wt% or less, and more specifically 4 wt% or less, of the polysiloxane based on the total weight of the polysiloxane-polycarbonate copolymer, and can generally be optically transparent and are commercially available under the designation EXL-T from SABIC. In another aspect, the polysiloxane-polycarbonate copolymer can include 10 wt% or more, specifically 12 wt% or more, and more specifically 14 wt% or more, of the polysiloxane copolymer based on the total weight of the polysiloxane-polycarbonate copolymer, are generally optically opaque and are commercially available under the trade designation EXL-P from SABIC.

Polyorganosiloxane-polycarbonates can have a weight average molecular weight of 2,000 Daltons to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonates can have a melt volume flow rate, measured at 300 degrees Celsius (°C) per 1.2 kilogram (kg), of 1 to 50 cubic centimeters per 10 minutes ($cm^3$/10 min), specifically 2 to 30 $cm^3$/10 min. Mixtures of polyorganosiloxane-polycarbonates of different flow properties can be used to achieve the overall desired flow property.

Non-limiting examples of polysiloxane-polycarbonate copolymers can include various copolymers available from SABIC. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 $cm^3$/10 min at 300 °C /1.2 kg (see C9030T, a 6 % by weight polysiloxane content copolymer available from SABIC as "transparent" EXL C9030T resin polymer). In another example, the polysiloxane-polycarbonate block can include 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a crosslinked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have a melt volume rate (MVR) at 300 °C/1.2 kg of 7 $cm^3$/ 10 min and can exhibit siloxane domains sized in a range of from about 5 nanometer

to about 20 micrometers (microns, μm), or 5 nm to 1000 nm, or 5 nm to 10 μm.

As provided herein, the polymer base resin may include polyesters resins. Polyester resins can include crystalline polyester resins such as polyester resins derived from at least one diol, and at least one dicarboxylic acid. Particular polyesters have repeating units according to structural formula (7)

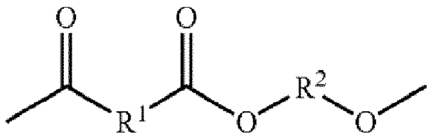

(7)

wherein, $R^1$ and $R^2$ are independently at each occurrence a aliphatic, aromatic and cycloaliphatic radical. In one aspect R2 is an alkyl radical compromising a dehydroxylated residue derived from an aliphatic or cycloaliphatic diol, or mixtures thereof, containing from 2 to about 20 carbon atoms and $R^1$ is an aromatic radical including a decarboxylated residue derived from an aromatic dicarboxylic acid. The polyester is a condensation product where $R^2$ is the residue of an aromatic, aliphatic or cycloaliphatic radical containing diol having C1 to C30 carbon atoms or chemical equivalent thereof, and $R^1$ is the decarboxylated residue derived from an aromatic, aliphatic or cycloaliphatic radical containing diacid of C1 to C30 carbon atoms or chemical equivalent thereof. The polyester resins are typically obtained through the condensation or ester interchange polymerization of the diol or diol equivalent component with the diacid or diacid chemical equivalent component.

Polymer base resin compositions of the present disclosure can be a single kind of polyester used alone, or two or more kinds used in combination. Furthermore, copolyesters can also be used as needed.

In another aspect, polyetherimides can be used in the disclosed compositions and can be of formula (8):

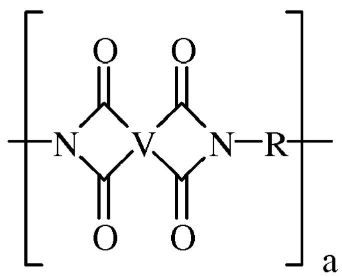

(8),

wherein a is more than 1, for example 10 to 1,000 or more, or more specifically 10 to 500.

The group V in formula (8) is a tetravalent linker containing an ether group (a "polyetherimide" as used herein) or a combination of an ether groups and arylenesulfone groups (a "polyetherimidesulfone"). Such linkers include but are not limited to: (a) substituted or unsubstituted, saturated, unsaturated or aromatic monocyclic and polycyclic groups having 5 to 50 carbon atoms, optionally substituted with ether groups, arylenesulfone groups, or a combination of ether groups and arylenesulfone groups; and (b) substituted or unsubstituted, linear or branched, saturated or unsaturated alkyl groups having 1 to 30 carbon atoms and optionally substituted with ether groups or a combination of ether groups, arylenesulfone groups, and arylenesulfone groups; or combinations including at least one of the foregoing. Suitable additional substitutions include, but are not limited to, ethers, amides, esters, and combinations including at least one of the foregoing.

The polyetherimide resin can be selected from the group consisting of a polyetherimide, for example, as described in U.S. Pat. Nos. 3,875,116, 6,919,422, and 6,355,723; a silicone polyetherimide, for example, as described in U.S. Pat. Nos. 4,690,997 and 4,808,686; a polyetherimidesulfone resin, as described in U.S. Pat. No. 7,041,773; or combinations thereof. Each of these publications is incorporated by this reference in its entirety.

In yet further examples, the polymer base resin may comprise a polypropylene. As used herein, the term "polypropylene" refers to a polymer comprising at least 95 wt. %, based on the weight of the polypropylene, of repeating units derived from propylene (i.e., $--CH_2-CH(CH_3)--$ units). In some embodiments, the polypropylene can comprise at least 98 wt. %, based on the weight of the polypropylene, of repeating units derived from propylene. When the polypropylene is a copolymer of propylene and another copolymerizable monomer, the other copolymerizable monomer can be, for example, ethylene, a $C_4$-$C_{12}$ alkene, a $C_1$-$C_6$-alkyl acrylate, a $C_1$-$C_6$-alkyl methacrylate, or a mixture of two or more of the foregoing monomers. In some aspects, the polypropylene can be a homopolymer of propylene. The polypropylene can be syndiotactic, isotactic, or atactic. For example, the polypropylene can be atactic.

In an aspect, the polypropylene component of the disclosed composition may comprise a one or both of polypropylene homopolymer and a polypropylene copolymer. In a further example, the composition can comprise a polypropylene homopolymer and a polypropylene copolymer wherein the propylene homopolymer is the minor component of the polypropylene polymer component. Minor component refers to the polypropylene homopolymer comprising less than half of the total weight of the polypropylene polymer component.

In some aspects, the polypropylene component comprises a polypropylene homopolymer and a polypropylene copolymer. In an example, the polypropylene homopolymer can have a melt flow index (MFI) of greater than about 25 g/10 minutes as measured at 230 °C and under 2.16 kg of load. In a further example, the polypropylene copolymer can have a notched Izod impact strength of greater than about 180 J/m as measured at 23 °C and a melt flow index of greater than about 10 g/10 minutes as measured at 230 °C and under a 2.16 kg load.

Certain aspects of the composition include from about 5 wt. % to about 99 wt. % of a polymer base resin. In further aspects, the composition includes from about 20 wt. % to about 80 wt. % of a polymer base resin, or from about 30 wt. % to about 50 wt. % of a polymer base resin, or from about 30 wt. % to about 45 wt. % of a polymer base resin.

In an aspect, the polymer base resin may be combined with a thermally conductive filler. Generally, the thermally conductive filler is anisotropic. Or in further examples, the thermally conductive filler may have an aspect ratio that is not 1:1 such that the filler may be oriented in a particular direction. The thermally conductive filler may thus have a particular shape so that the filler may be oriented in a direction. For example, the thermally conductive filler may include blocks, flakes, fibers, whisker, needle-like shapes or a combination thereof. The thermally conductive filler may have any dimensionality, including 1D, 2D and 3D geometries.

Particle size and/or aspect ratio of the selected thermally conductive filler may affect thermal conductive properties of the composition and the foam quality of the foamed, molded article formed therefrom. For example, any relative improvement in the through-plane thermal conductivity upon foam injection molding with core back may be greater for a thermally conductive filler graphite having a smaller diameter and/or lower aspect ratio. Without wishing to be bound by any particular theory, re-alignment or rotation of the smaller or lower aspect ratio platelet filler and/or fiber filament in the polymer melt during processing may be less hampered than such re-alignment or rotation of larger diameter or higher aspect ratio fiber filaments.

In some aspects, the composition can include a thermally conductive filler having a certain particle size and/or surface area. The thermally conductive filler may be a platelet filler having an average diameter less than 100 micron, less than 50 micron, or less than 30 microns. As an example, the thermally conductive filler may have a particle size distribution $D_{50}$ between 10 nanometers (nm) and 500 micrometers ($\mu$m). In particular examples, the thermally conductive filler may comprise a graphite having a D50 of less than 100 microns, less than 75 microns, less than 50 microns, less than 30 microns. In a further example, the suitable thermally conductive fillers may have a surface area between 0.1 square meters per gram ($m^2$/g) and 2000 $m^2$/g.

Examples of useful thermally conductive filler may include but are not limited to, ZnS (zinc sulfide), CaO (calcium oxide), MgO (magnesium oxide), ZnO (zinc oxide), or $TiO_2$ (titanium dioxide), tin dioxide, chromium Oxide, $CaCO_3$ (calcium carbonate), mica, BaO (barium oxide), $BaSO_4$ (barium sulfate), $CaSO_4$ (calcium sulfate), $CaSiO_3$ (wollastonite), $ZrO_2$ (Zirconium oxide), $SiO_2$ (Silicon oxide), Glass fiber, $MgO \cdot xAl_2O_3$ (magnesium aluminate), $CaMg(CO_3)_2$ (dolomite), coated graphite, $Mg(OH)_2$ (magnesium hydroxide), $H_2Mg_3(SiO_3)_4$ (talc), $\gamma$-AlO(OH) (boehmite), $\alpha$-AlO(OH) (diaspore), $Al(OH)_3$ (Gibbsite), clay, AlN (aluminum nitride), $Al_4C_3$ (aluminum carbide), $Al_2O_3$ (aluminum oxide), BN (boron nitride), AlON (aluminum oxynitride), $MgSiN_2$ (magnesium silicon nitride), SiC (silicon carbide), $Si_3N_4$ (silicon nitride), tungsten oxide, aluminum phosphide, beryllium oxide, boron phosphide, cadmium sulfide, gallium nitride, zinc silicate, $WO_3$, carbon based fillers, which include graphite, expanded graphite, expandable graphite, graphene, carbon fiber, CNT (carbon nano-tube); or a combination thereof. In specific examples, the thermally conductive filler may be graphite. In some aspects, the thermally conductive filler may have a thermal conductivity of greater than 5 watts per meter kelvin (W/m*K).

In some aspects, the composition can include from about 1 wt. % to about 70 wt. % of a thermally conductive filler. In further aspects the composition may include from about 15 wt. % to about 70 wt. % of a thermally conductive filler, or from about 20 wt. % to about 70 wt. % of a thermally conductive filler, or from about 25 wt. % to about 70 wt. % of a thermally conductive filler, or from about 30 wt. % to about 70 wt. % of a thermally conductive filler, or from about 45 wt. % to about 70 wt. % of a thermally conductive filler, or from about 15 wt. % to about 65 wt. % of a thermally conductive filler, or from about 20 wt. % to about 65 wt. % of a thermally conductive filler, or from about 20 wt. % to about 60 wt. % of a thermally conductive filler.

According to further aspects of the disclosure, the polymer compositions may comprise additional components that contribute to improved thermal conductivity and foam quality. These additional components may include a nanostructured fluoropolymer and/or a polymer compatibilizer. Incorporation of a nanostructured fluoropolymer may specifically improve quality of the foamed structure. For example, a polymer containing the nanostructured fluoropolymer may ensure a uniform cell size structure compared to the same compounds without adding the nanostructured fluoropolymer .

Polymers suitable for use as the nanostructure polymer component of the disclosure may comprise a nanostructure forming fluoropolymer such as polytetrafluoroethylene (PTFE). As used herein, the term "nanostructure" refers to a material in which one dimension of the material is equal to or less than 1000 nm (e.g., one dimension is 1 to 1000 nm in size). In a particular aspect, the nanostructure includes at least two dimensions that are equal to or less than 1000 nm (e.g., a first dimension is 1 to 1000 nm in size and a second dimension is 1 to 1000 nm in size). In another aspect, the nanostructure includes three dimensions that are equal to or less than 1000 nm (e.g., a first dimension is 1 to 1000 nm in size, a second dimension is 1 to 1000 nm in size, and a third dimension is 1 to 1000 nm in size). The shape of the nanostructure can be of a wire, a particle (e.g., having a substantially spherical shape), a rod, a tetrapod, a hyper-branched structure, a tube, a cube, or mixtures thereof. The nanostructures can be monodisperse, where all particles are of the same size with little variation, or polydisperse, where the particles have a range of sizes and are averaged.

Fluoropolymers suitable for nanostructuring according to the disclosure are capable of being nanostructured during mixing with the thermoplastic resin, the filler, or both simultaneously. Methods for the preparation of the nanostructured fluoropolymer are described on WO 2018122747. The extruded nanostructured fluoropolymer masterbatch can have a low shear viscosity between 800 to 4000 Pa.s (0.1 rad/s) and a tan delta from 1 to 10 as measured according to ISO 6721. The viscosity can be from 800 to 950, or 1000 to 2000, or 1500 to 3000, or 2500 to 4000 Pa.s. The tan delta maximum can be from 5 to 7, or 5 to 8.5 or 6 to 9, or 7 to 10..

In some examples, the polymer composition may comprise from about 0.1 wt.% to about 15 wt.%, based on the weight of the polymer composition, of the nanostructured fluoropolymer. The polymer compositions may comprise 0.1, 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, or 15 wt.%, based on the weight of the polymer composition, of the nanostructured polymer. In further embodiments, the polymer compositions comprise about 0.1, about 0.2, about 0.3, about 0.4, about 0.5, about 0.6, about 0.7, about 0.8, about 0.9, about 1, about 1.5, about 2, about 2.5, about 3, about 3.5, about 4, about 4.5, about 5, about 5.5, about 6, about 6.5, about 7, about 7.5, about 8, about 8.5, about 9, about 9.5, about 10, about 10.5, about 11, about 11.5, about 12, about 12.5, about 13, about 13.5, about 14, about 14.5, or about 15 wt.% based on the weight of the polymer composition, of the nanostructured fluoropolymer.

Suitable fluoropolymers are described in U.S. 7,557,154 and include but are not limited to homopolymers and copolymers that comprise structural units derived from one or more fluorinated alpha-olefin monomers, that is, an alpha-olefin monomer that includes at least one fluorine atom in place of a hydrogen atom. In one embodiment the fluoropolymer comprises structural units derived from two or more fluorinated alpha-olefin, for example tetrafluoroethylene, hexafluoroethylene, and the like. In another embodiment, the fluoropolymer comprises structural units derived from one or more fluorinated alpha-olefin monomers and one or more non-fluorinated monoethylenically unsaturated monomers that are copolymerizable with the fluorinated monomers, for example alpha-monoethylenically unsaturated copolymerizable monomers such as ethylene, propylene, butene, acrylate monomers (e.g., methyl methacrylate and butyl acrylate), vinyl ethers, (e.g., cyclohexyl vinyl ether, ethyl vinyl ether, n-butyl vinyl ether, vinyl esters) and the like. Specific examples of fluoropolymers include polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, and ethylene chlorotrifluoroethylene. Combinations comprising at least one of the foregoing fluoropolymers may also be used.

As is known, fluoropolymers are available in a variety of forms, including powders, emulsions, dispersions, agglomerations, and the like. "Dispersion" (also called "emulsion") fluoropolymers are generally manufactured by dispersion or emulsion, and may comprise 25 to 60 wt%, or about 25 wt% to 60 wt%, fluoropolymer in water, stabilized with a surfactant, wherein the fluoropolymer particles are 0.1-0.3 $\mu$m. "Fine powder" (or "coagulated dispersion") fluoropolymers may be made by coagulation and drying of dispersion-manufactured fluoropolymers. Fine powder fluoropolymers are generally manufactured to have a particle size of 400-500 $\mu$m. "Granular" fluoropolymers may be made by a suspension method, and are generally manufactured in two different particle size ranges, including a median particle size of 30-40 $\mu$m and a high bulk density product exhibiting a median particle size of 400-500 $\mu$m. Pellets of fluoropolymer may also be obtained and cryogenically ground to exhibit the desired particle size.

The fluoropolymer may be at least partially encapsulated by an encapsulating polymer that may be the same as or different from the matrix polymer (hereinafter referred to as an "encapsulated polymer"). Without being bound by theory, it is believed that encapsulation may aid in the distribution of the fluoropolymer within the polymer matrix, and/or compatibilize the fluoropolymer with the matrix.

Suitable encapsulating polymers may include, but are not limited to, vinyl polymers, acrylic polymers, polyacrylonitrile, polystyrenes, polyolefins, polyesters, polyurethanes, polyamides, polysulfones, polyimides, polyetherimides, polyphenylene ethers, polyphenylene sulfides, polyether ketones, polyether ether ketones, acrylonitrile butadiene styrene (ABS) resins, polyethersulfones, poly(alkenylaromatic) polymers, polybutadiene, liquid crystalline polymers, polyacetals, polycarbonates, polyphenylene ethers, ethylene-vinyl acetate copolymers, polyvinyl acetate, liquid crystal polymers, ethylene-tetrafluoroethylene copolymer, aromatic polyesters, polyvinyl fluoride, polyvinylidene fluoride, polyvinylidene chloride, and combinations comprising at least one of the foregoing polymers.

The encapsulating polymers may be obtained by polymerization of monomers or mixtures of monomers by methods known in the art, for example, condensation, addition polymerization, and the like. Emulsion polymerization,

particularly radical polymerization may be used effectively. In one embodiment, the encapsulating polymer is formed from monovinylaromatic monomers containing condensed aromatic ring structures, such as vinyl naphthalene, vinyl anthracene and the like. Examples of suitable monovinylaromatic monomers include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene may be specifically mentioned. Other useful monomers for the formation of the encapsulating polymer include monovinylic monomers such as itaconic acid, acrylamide, N-substituted acrylamide or methacrylamide, maleic anhydride, maleimide, N-alkyl-, aryl-, or haloaryl-substituted maleimide, and glycidyl (meth)acrylates. Other monomers include acrylonitrile, ethacrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers.

Mixtures of the foregoing monovinylaromatic monomers and monovinylic monomers may also be used, for example mixtures of styrene and acrylonitrile (SAN). The relative ratio of monovinylaromatic and monovinylic monomers in the rigid graft phase may vary widely depending on the type of fluoropolymer, type of monovinylaromatic and monovinylic monomer(s), and the desired properties of the encapsulant. The encapsulant may generally be formed from up to 100 wt. %, or up to about 100 wt. % of monovinyl aromatic monomer, specifically 30 to 100 wt. %, more specifically 50 to 90 wt. % monovinylaromatic monomer, with the balance being comonomer(s).

Elastomers may also be used as the encapsulating polymer, as well as elastomer-modified graft copolymers. Suitable elastomers include, for example, conjugated diene rubbers; copolymers of a conjugated diene with less than 50 wt. %, or less than about 50 wt. %, of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C1-8 alkyl (meth)acrylates; elastomeric copolymers of C1-8 alkyl (meth)acrylates with butadiene and/or styrene; or combinations comprising at least one of the foregoing elastomers.

Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as mixtures comprising at least one of the foregoing conjugated diene monomers. Specific conjugated diene homopolymers include polybutadiene and polyisoprene.

Copolymers of conjugated diene rubbers may also be used, for example those produced by aqueous radical emulsion polymerization of a conjugated diene and up to 10 wt. %, or up to about 10 wt. %, of one or more monomers copolymerizable therewith. (Meth)acrylate monomers suitable for use as an elastomeric encapsulating monomer include the cross-linked, particulate emulsion homopolymers or copolymers of C4-8 alkyl (meth)acrylates, in particular C4-6 alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. Exemplary comonomers include but are not limited to butadiene, isoprene, styrene, methyl methacrylate, phenyl methacrylate, phenylethyl methacrylate, N-cyclohexylacrylamide, vinyl methyl ether or acrylonitrile, and mixtures comprising at least one of the foregoing comonomers. Optionally, up to 5 wt. % of a polyfunctional crosslinking comonomer may be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

Suitable elastomer-modified graft copolymers may be prepared by first providing an elastomeric polymer (for example, as described above), then polymerizing the constituent monomer(s) of the rigid phase in the presence of the fluoropolymer and the elastomer to obtain the graft copolymer. The elastomeric phase may provide 5 to 95 wt. % of the total graft copolymer, more specifically 20 to 90 wt. %, and even more specifically 40 to 85 wt. % of the elastomer-modified graft copolymer, the remainder being the rigid graft phase. In further examples, the elastomeric phase may provide about 5 to about 95 wt. % of the total graft copolymer, more specifically about 20 to about 90 wt. %, and even more specifically about 40 to about 85 wt. % of the elastomer-modified graft copolymer, the remainder being the rigid graft phase. Depending on the amount of elastomer-modified polymer present, a separate matrix or continuous phase of ungrafted rigid polymer or copolymer may be simultaneously obtained along with the elastomer-modified graft copolymer.

Specific encapsulating polymers include polystyrene, copolymers of polystyrene, poly(alpha-methylstyrene), poly(alpha-ethylstyrene), poly(alpha-propylstyrene), poly(alpha-butylstyrene), poly(p-methylstyrene), polyacrylonitrile, polymethacrylonitrile, poly(methyl acrylate), poly(ethyl acrylate), poly(propyl acrylate), and poly(butyl acrylate), poly(methyl methacrylate), poly(ethyl methacrylate), poly(propyl methacrylate), poly(butyl methacrylate); polybutadiene, copolymers of polybutadiene with propylene, poly(vinyl acetate), poly(vinyl chloride), poly(vinylidene chloride), poly(vinylidene fluoride), poly(vinyl alcohols), acrylonitrile-butadiene copolymer rubber, acrylonitrile-butadiene-styrene (ABS), poly(C4-8 alkyl acrylate) rubbers, styrene-butadiene rubbers (SBR), EPDM rubbers, silicon rubber and combinations comprising

at least one of the foregoing encapsulating polymers. A preferred fluoropolymer is polytetrafluoroethylene.

In certain examples, the encapsulating polymer comprises a styrene-acrylonitrile copolymer, an acrylonitrile-butadiene-styrene copolymer, alpha-alkyl-styrene-acrylonitrile copolymer, an alpha-methylstyrene-acrylonitrile copolymer, a styrene-butadiene rubber, a methyl methacrylate copolymer, or a combination thereof. In another embodiment, the encapsulating polymer comprises SAN, ABS copolymers, alpha-(C1-3)alkyl-styrene-acrylonitrile copolymers, alpha-methylstyrene-acrylonitrile (AMSAN) copolymers, SBR, and combinations comprising at least one of the foregoing. In yet another embodiment the encapsulating polymer is SAN or AMSAN. A preferred fluoropolymer encapsulated by an encapsulating polymer may comprise styrene acrylonitrile encapsulated polytetrafluoroethylene.

Suitable amounts amount of encapsulating polymer may be determined by one of ordinary skill in the art without undue experimentation, using the guidance provided herein. In one embodiment, the encapsulated fluoropolymer comprises 10 to 90 weight percent (wt. %), or about 10 to about 90 wt. %, fluoropolymer and 90 to 10 wt. %, or about 90 wt. % to about 10 wt. %, of the encapsulating polymer, based on the total weight of the encapsulated fluoropolymer. Alternatively, the encapsulated fluoropolymer comprises 20 to 80 wt. %, or about 20 to about 80 wt. %, more specifically 40 wt. % to 60 wt. %, or about 40 to about 60 wt. % fluoropolymer, and 80 wt. % to 20 wt. %, or about 80 to about 20 wt. %, specifically, 60 wt. % or 40 wt. %, or about 60 about 40 wt. % encapsulating polymer, based on the total weight of the encapsulated polymer.

In one aspect, the thermoplastic comprises one or more polymer compatibilizers. Suitable compatibilizers may comprise polyolefins functionalized with glycidyl groups. In another aspect, suitable polymer compatibilizers may be polyolefins functionalized with maleic anhydride.

In another aspect, polyolefins functionalized with maleic anhydride (MAH) can comprise maleic anhydride grafting polyethylene or polypropylene polymers. In still a further aspect, maleic anhydride grafting polyethylene copolymer may be ethylene-propylene polymer, ethylene-propylene-diene terpolymer (MAH-g-EPDM), ethylene-octene copolymer (MAH-g-POE), ethylene-butene copolymer (MAH-g-EBR), ethylene-acrylic ester copolymer (MAH-g-EAE). In yet another aspect, the maleic anhydride grafting polyethylene copolymer may be styrene-ethylene/butadiene-styrene (MAH-g-SEBS), Acrylonitrile-butadiene-styrene (MAH-g-ABS).

In another aspect, the polymer composition comprises about 0.15 wt. % to about 15 wt.% of a polymer compatibilizer. In still another aspect, the composition comprises about 1 wt% to about 5 wt% of a polymer compatibilizer. In still another aspect, the composition comprises about 1 wt% to about 2 wt% of a polymer compatibilizer.

## PROPERTIES AND ARTICLES

Conventionally, the thermal conductivity of engineering plastics is improved using (conductive) fillers in form of platelets or fibers. The present disclosure enables re-orientation of the conductive fillers in a through-plane direction which facilitates higher through-plane conductivities, for example of at least 1.5 W/mK, potentially with filler content in range of about 25 wt. % to about 70 wt. % thermally conductive filler loading. The disclosed molded articles may also exhibit improved foam quality with respect to cellular structure and distribution. Specifically, the molded articles may exhibit substantially uniform or more uniform foamed microstructures, while maintaining higher through-plane thermal conductivity when compared to a substantially similar molded article processed using standard injection molding techniques and conventional components.

The advantageous physical characteristics of the thermoplastic compositions disclosed herein may make them appropriate for an array of uses. For example, the disclosed processes and articles formed therefrom may be useful in any application where filler orientation in the direction of sample thickness is required. This may include, for example, through-plane conductivity applications.

Heat exchangers (HEX) represent a class of products/applications/articles that are suitable for exploitation of thermally conductive materials formed according to the disclosed processes. The disclosed articles having improved through-plane thermal conductivity may be useful in plate-plate HEX (plate heat exchangers PHE) as well as shell-tube HEX or any other type of HEX that is used to transfer heat through a wall distinguishing two given media (such as, for example, fluids and/or gasses). These HEX are applicable in systems where (sea) water is used as a first medium (or any other fluid), as in the fields of ocean thermal energy conversion (OTEC) technology, district cooling, ship engine cooling , desalination processes, heat recovery in municipal sewer systems, as well as HEX in industrial plants. Conventionally, aluminum, stainless steel or even titanium HEX are used in these applications. Those HEX however may suffer from corrosion and necessitate high maintenance costs. Typically, HEX’s may contribute to 25 % - 50 % of capital expenditures for a commercial OTEC plant. Fully thermoplastic HEXs, which are a suitable application for the disclosed articles formed herein, may require less maintenance and may be more cost effective. The disclosed articles may be a low-cost solution and may provide a minimal threshold of 1.5 W/mK through-plane thermal conductivity which is required for effective heat transfer.

In various aspects, the present invention pertains to and includes at least the following aspects.

Aspect 1. A polymer composition comprising: from about 5 wt. % to about 99 wt. % of a polymer base resin; from about 15 wt. % to about 70 wt. % of a thermally conductive filler, wherein the thermally conductive filler has an aspect ratio greater than 1:1; and one or more of from about 0.01 to about 5 wt. % of a nanostructured fluoropolymer or from about 0.1 wt. % to about 15 wt. % of a polymer compatibilizer, wherein the combined weight percent value of all components does not exceed 100 wt. %, and all weight percent values are based on the total weight of the composition, and wherein a foamed, core-back opened, molded article of the polymer composition exhibits a thermal conductivity of at least 1.5 W/mK when tested in accordance with ISO 22007-2.

Aspect 2. A polymer composition formed from a method comprising: combining, to form a blend, from about 5 wt. % to about 99 wt. % of a polymer base resin; from about 10 wt. % to about 60 wt. % of a thermally conductive filler, wherein the filler has an aspect ratio greater than 1:1; from about 0.01 wt. % to about 2 wt. % of a foaming agent, wherein the combined weight percent value of all components does not exceed 100 wt. %, and all weight percent values are based on the total weight of the composition, and injection molding the blend, foaming the blend, and wherein a foamed, core-back opened, molded article of the polymer composition exhibits a thermal conductivity of at least 3 W/mK when tested in accordance with ISO 22007-2.

Aspect 3. The polymer composition of claim 1, wherein the thermally conductive filler is a platelet filler having an average diameter of less than 100 microns.

Aspect 4. The polymer composition of claim 1, wherein the thermally conductive filler is a platelet filler having an average diameter of less than 50 microns.

Aspect 5. The polymer composition of claim 1, wherein the thermally conductive filler is a platelet filler having an average diameter of less than 30 microns.

Aspect 6. The polymer composition of claim 1, wherein the polymer base resin comprises a polypropylene.

Aspect 7. The polymer composition of claim 1, wherein the thermally conductive filler comprises a platelet.

Aspect 8. The polymer composition of claim 1, wherein the thermally conductive filler comprises graphite.

Aspect 9. The polymer composition of claim 1, wherein the polymer composition further comprises a reinforcing filler.

Aspect 10. The polymer composition of claim 1, wherein the polymer composition further comprises a foaming agent.

Aspect 11. The polymer composition 1, wherein the molded article has a through-plane thermal conductivity of from at least 3 Watts per meter Kelvin (W/mK) when tested in accordance with ISO 22007-2.

Aspect 12. The polymer composition 1, wherein the molded article is a heat exchanger.

Aspect 13. A polymer composition comprising: from about 5 wt. % to about 99 wt. % of a polymer base resin; from about 10 wt. % to about 60 wt. % of a thermally conductive filler, wherein the filler has an aspect ratio greater than 1:1; and one or more of from about 0.01 to about 5 wt. % of a nanostructured fluoropolymer or from about 0.1 wt. % to about 15 wt. % of a polymer compatibilizer, wherein the combined weight percent value of all components does not exceed 100 wt. %, and all weight percent values are based on the total weight of the composition, and wherein a foamed molded article of the polymer composition exhibits a thermal conductivity of at least 1.5 W/mK when tested in accordance with ISO 22007-2.

While aspects of the present disclosure can be described and claimed in a particular statutory class, such as the system statutory class, this is for convenience only and one of skill in the art will understand that each aspect of the present invention can be described and claimed in any statutory class. Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this disclosure belongs.

As used in the specification and the appended claims, the singular forms "a," "an" and "the" include plural referents unless the context clearly dictates otherwise. Thus, for example, reference to "a polycarbonate" includes mixtures of two or more such polycarbonates. Furthermore, for example, reference to a filler includes mixtures of two or more such fillers.

As used herein, pellet may describe small, compressed mass of a given material such as a polymer. It should be noted that while the term pellets is herein for brevity, other forms of fiber reinforced thermoplastics are contemplated as well. For example, other forms of fiber reinforced thermoplastics may include chopped strands, a mixture of plastic pellets and loose glass fibers or filaments, and the like.

As used herein, through-plane thermal conductivity may refer to the thermal conductivity of the thermoplastic molded product perpendicular to the flow direction during filling of the molded product and/or the thermal conductivity of the thermoplastic molded product in the thickness direction of the molded product.

As used herein, D represents the diameter of particles, $D_{50}$ is a cumulative 50% point of diameter (or 50% pass particle or the value of the particle diameter at 50 % in the cumulative distribution); $D_{10}$ means a cumulative 10% point of diameter; and $D_{90}$ is a cumulative 90% point of diameter; $D_{50}$ is also called average particle size or median diameter.

Ranges can be expressed herein as from "about " one particular value, and/or to "about " another particular value. When such a range is expressed, another aspect includes from the one particular value and/or to the other particular value. Similarly, when values are expressed as approximations, by use of the antecedent "about," it will be understood that the particular value forms another aspect. A value modified by a term or terms, such as "about " and "substantially," is intended to include the degree of error associated with measurement of the particular quantity based upon the equipment available at the time of filing this application. It will be further understood that the endpoints of each of the ranges are significant both in relation to the other endpoint, and independently of the other endpoint. It is also understood that there are a number of values disclosed herein, and that each value is also herein disclosed as "about " that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" mean that the subsequently described event, condition, component, or circumstance may or may not occur, and that the description includes instances where said event or circumstance occurs and instances where it does not.

Disclosed are component materials to be used to prepare disclosed compositions as well as the compositions themselves to be used within methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

Compounds disclosed herein are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this disclosure belongs.

As used herein, the terms "weight average molecular weight" or "Mw" can be used interchangeably, and are defined by the formula:

$$Mw = \frac{\sum N_i M_i^2}{\sum N_i M_i},$$

where Mi is the molecular weight of a chain and Ni is the number of chains of that molecular weight. Compared to Mn, Mw takes into account the molecular weight of a given chain in determining contributions to the molecular weight average.

Thus, the greater the molecular weight of a given chain, the more the chain contributes to the Mw. It is to be understood that as used herein, Mw is measured by gel permeation chromatography. In some cases, Mw can be measured by gel permeation chromatography and calibrated with polycarbonate standards. As an example, a polycarbonate of the present disclosure can have a weight average molecular weight of greater than 5,000 Daltons, or greater than about 5,000 Daltons based on PS standards. As a further example, the polycarbonate can have an Mw of from 20,000 Daltons to 100,000 Daltons, or from about 20,000 to about 100,000 Daltons.

EXAMPLES

Detailed embodiments of the present disclosure are disclosed herein; it is to be understood that the disclosed embodiments are merely exemplary of the disclosure that may be embodied in various forms. Therefore, specific structural and functional details disclosed herein are not to be interpreted as limits, but merely as a basis for teaching one skilled in the art to employ the present disclosure. The following examples are provided to illustrate the compositions, processes, and properties of the present disclosure. The examples are merely illustrative and are not intended to limit the disclosure to the materials, conditions, or process parameters set forth therein.

***General Materials and Methods***

The compositions as set forth in the Examples below were prepared from the components presented in Table 1.

Table 1: Raw materials for analysis.

| Raw material | Description | Supplier |
|---|---|---|
| PP578N | Injection molding grade PP (MFR 230C/2.16kg=25) | SABIC |
| PP500P | Extrusion/injection molding grade PP (MFR 230C/2.16kg=3) | SABIC |
| Lotader AX8900 | Ethylene-methylacrylate-glycidylacrylate copolymer | Arkema |
| Graphite 2607 | Graphite, (d50: ~26 micron) | Graphexel |
| Timrex 80x150 | Graphite (d50: ~120 micron) | Imerys |
| 20%TSAN/PP595A | Masterbatch of 20% TSAN in SABIC PP595A | In-house made |

Formulations were prepared as follows for the samples presented in Table 2 (shown in FIG. 7). Samples #1 to #5, #7 and #8 were extruded on a vacuum-vented 26 mm co-rotating W&F extruder. The melt was stranded though a two hole (3mm diameter per hole) die plate on a conveyor belt, cooled (through water sprays), dried (using blow dryers) and cut into pellets using a pelletizer. The extrusion profile used is summarized in table 3. Formulation #6 was formed by dry blending 90% of Sample #2 with 10% of a nanostructured PTFE/PP masterbatch made from a 20% SAN encapsulated PTFE (50/50wt/wt%) PP compound according to the process described according to methods in WO 2018122747.

As noted above, Table 3 (FIG. 8) provides the extrusion profile for processing. The prepared Samples S1-S8 were injection molded on an Arburg Allrounder 520H equipped with MuCell and core back-technology. Typically, 0.1-0.5% nitrogen gas $N_2$ is added to the plastic compound before injecting it in the cavity (typically but not limited to about 99% filling). After the filling, the mold is opened to facilitate (further) cell expansion in the direction of the mold opening. Solid plaques without $N_2$ were molded as comparative samples.

For the current experiments, initial mold cavity thickness was 2mm and molds were opened to 4mm, allowing maximum a 100% core back ratio. The core back ratio was defined as follows:

$$((\text{final thickness of mold upon opening - initial thickness of mold not opened})/\text{initial thickness of mold not opened}) \times 100$$

Molding temperature settings in the barrel were increased from 180 °C to 220 °C at the nozzle and hot runner. Mold temperature was in the range of 60 - 100 °C.

The resulting parts were analyzed with respect to foam quality and thermal conductivity. Results are presented in Table 4. Thermal conductivity was measured according to ISO 22007-2 using a Hotdisk TPS 2500 analyzer. Foam quality was qualitatively determined. Photographs of a cross-sectional cut were used to determine foam quality based on a scale from 1 to 5. A value of 1 indicated major or substantial cracking apparent in the cross-section and/or a large

cell size distribution (foam cells of varying sizes) while a value of 5 indicated no cracks and a substantially uniform foam cell size distribution. The values were obtained from 4 different inspections and averaged to provide the "Quality foam" values in Table 4 (FIG. 9).

The trend in the data shows that increasing the graphite content negatively affected the foam quality, but positively affected the through-plane thermal conductivity (compare Sample 1-2 and 2-2 as well as Sample 3-2 and 4-2). Foaming in all cases improves the through-plane thermal conductivity as can be observed from the TC improvement factor, defined as :

$$\text{TC improvement factor} = \text{Through-plane thermal conductivity foamed core back sample}/\text{through-plane thermal conductivity non-foamed (0\% core back)}$$

It was observed that higher graphite loadings yielded higher through-plane thermal conductivities in the non-foamed samples, but also higher TC improvement factors. At these higher loadings, the smaller diameter (or, possibly, aspect ratio) thermally conductive filler Graphexel Graphite 2607 yielded a higher TC-improvement factor compared to the larger diameter thermally conductive filler Timrex 80 x150.

FIG. 10 presents the through-plane TC as a function of the core back ratio. As shown, the through-plane thermal conductivity increased substantially linearly with core back ratio, i.e. with more foaming.

The introduction of a compatibilizer improved the foam quality based on a comparison of Samples 4-2 and 5.2, while only marginally affecting the through-plane thermal conductivity. The introduction of nanostructured fluoropolymer positively improved the foam quality from 2.13 (Sample 2-2) to 3.13 (Sample 6-5). Although sample 6 has slightly less graphite (45 wt.%) compared to sample 2 (50 wt. %), it is still believed that the significant improvement in foam quality is the result of the added nanostructured fluoropolymer. Thermal conductivity was affected, but that was not surprising because the sample had less graphite.

It is noted that the molecular weight of the base polypropylene resin did not seem to have a large effect on foam quality based on a comparison of Sample 1-2 and 7-2 with sample 3-2 and 8-2.

Given the data set herein, the disclosed samples provided foamed structures with good mechanical integrity and mechanical properties and having high through-plane thermal conductivities, particularly those samples further comprising nanostructured fluoropolymer and/or a compatibilizer. Furthermore, smaller diameter fillers (particularly smaller diameter graphite thermally conductive filler) provided higher absolute through-plane thermal conductivity as well as a relative higher improvement in through-plane thermal conductivity upon foaming (higher TC improvement factor).

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A polymer composition comprising:

from about 5 wt. % to about 99 wt. % of a polymer base resin;
from about 15 wt. % to about 70 wt. % of a thermally conductive filler, wherein the thermally conductive filler has an aspect ratio greater than 1:1;
and one or more of from about 0.01 to about 5 wt. % of a nanostructured fluoropolymer or from about 0.1 wt. % to about 15 wt. % of a polymer compatibilizer,
wherein the combined weight percent value of all components does not exceed 100 wt. %, and all weight percent values are based on the total weight of the composition, and
wherein a foamed, core-back opened, molded article of the polymer composition exhibits a thermal conductivity of at least 1.5 W/mK when tested in accordance with ISO 22007-2.

**2.** A polymer composition formed from a method comprising:

Combining, to form a blend,

from about 5 wt. % to about 99 wt. % of a polymer base resin;
from about 15 wt. % to about 70 wt. % of a thermally conductive filler, wherein the filler has an aspect ratio

greater than 1:1;
from about 0.01 wt. % to about 2 wt. % of a foaming agent,
wherein the combined weight percent value of all components does not exceed 100 wt. %, and all weight percent values are based on the total weight of the composition, and

injection molding the blend, foaming the blend, and
wherein a foamed, core-back opened, molded article of the polymer composition exhibits a thermal conductivity of at least 1.5 W/mK when tested in accordance with ISO 22007-2.

**3.** The polymer composition of claim 1, wherein the thermally conductive filler is a platelet filler having an average diameter of less than 100 microns.

**4.** The polymer composition of claim 1, wherein the thermally conductive filler is a platelet filler having an average diameter of less than 50 microns.

**5.** The polymer composition of claim 1, wherein the thermally conductive filler is a platelet filler having an average diameter of less than 30 microns.

**6.** The polymer composition of claim 1, wherein the polymer base resin comprises a polypropylene.

**7.** The polymer composition of claim 1, wherein the thermally conductive filler comprises a platelet.

**8.** The polymer composition of claim 1, wherein the thermally conductive filler comprises graphite.

**9.** The polymer composition of claim 1, wherein the polymer composition further comprises a reinforcing filler.

**10.** The polymer composition of claim 1, wherein the polymer composition further comprises a foaming agent.

**11.** The polymer composition 1, wherein the molded article has a through-plane thermal conductivity of at least 3 Watts per meter Kelvin (W/mK) when tested in accordance with ISO 22007-2.

**12.** The polymer composition 1, wherein the molded article is a heat exchanger.

**13.** A polymer composition comprising:

from about 5 wt. % to about 99 wt. % of a polymer base resin;
from about 10 wt. % to about 60 wt. % of a thermally conductive filler, wherein the filler has an aspect ratio greater than 1:1;
and one or more of from about 0.01 to about 5 wt. % of a nanostructured fluoropolymer or from about 0.1 wt. % to about 15 wt. % of a polymer compatibilizer,
wherein the combined weight percent value of all components does not exceed 100 wt. %, and all weight percent values are based on the total weight of the composition, and
wherein a foamed molded article of the polymer composition exhibits a thermal conductivity of at least 1.5 W/mK when tested in accordance with ISO 22007-2.

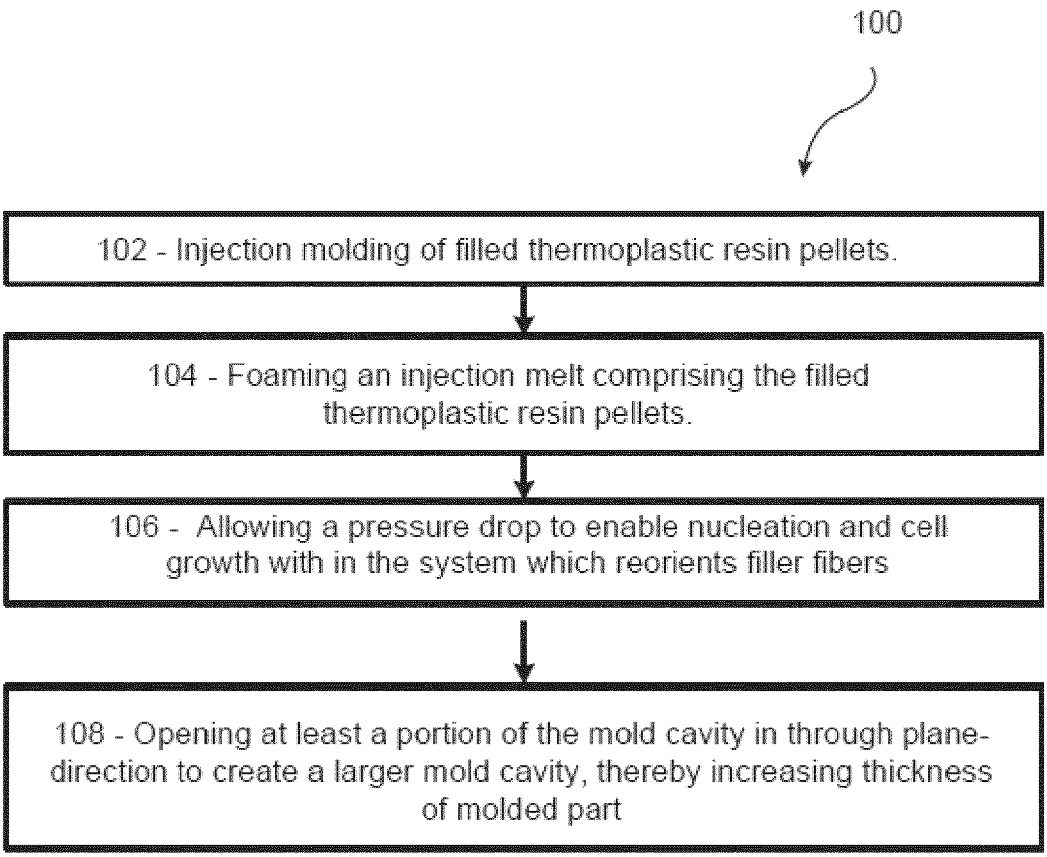
100
102 - Injection molding of filled thermoplastic resin pellets.
104 - Foaming an injection melt comprising the filled thermoplastic resin pellets.
106 - Allowing a pressure drop to enable nucleation and cell growth with in the system which reorients filler fibers
108 - Opening at least a portion of the mold cavity in through plane-direction to create a larger mold cavity, thereby increasing thickness of molded part

FIG. 1

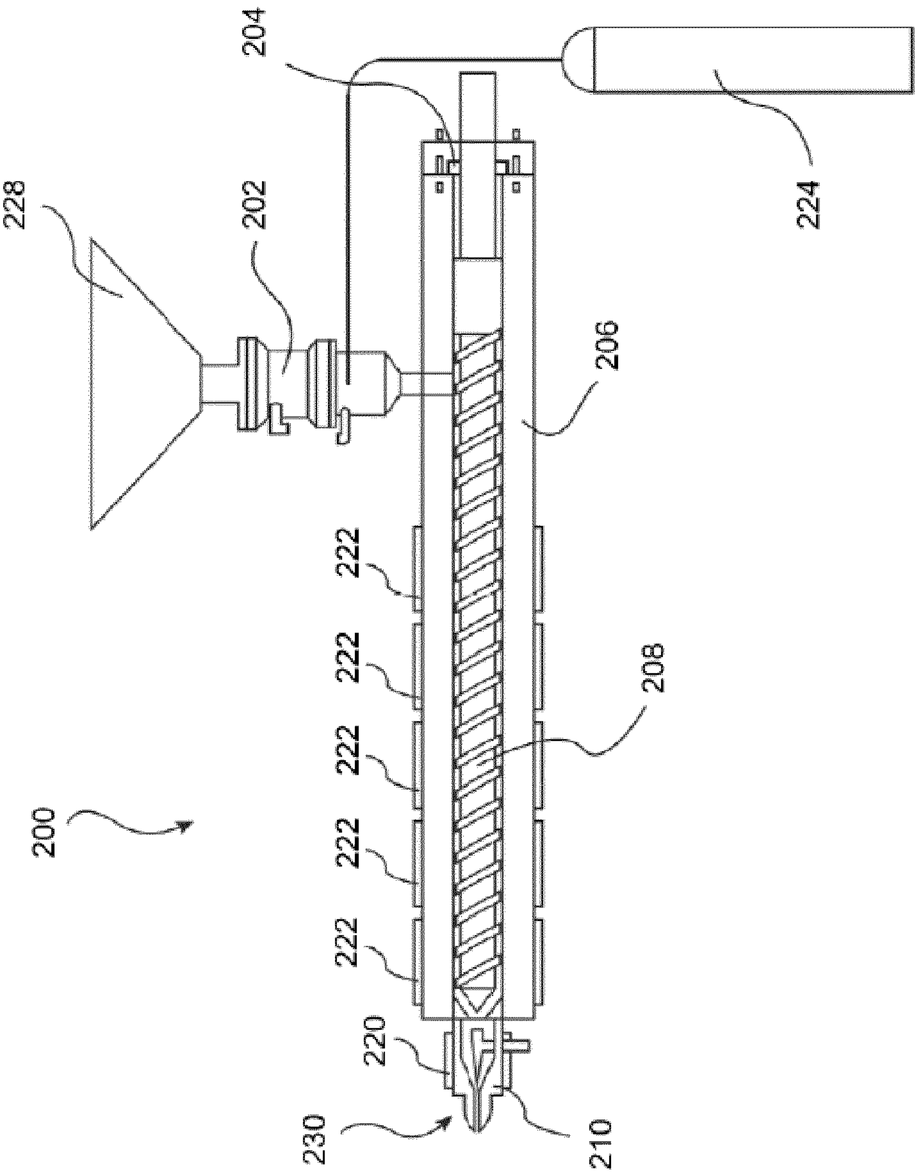


FIG. 2

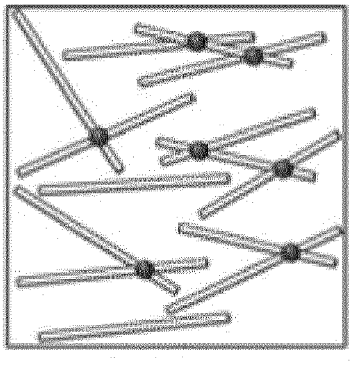

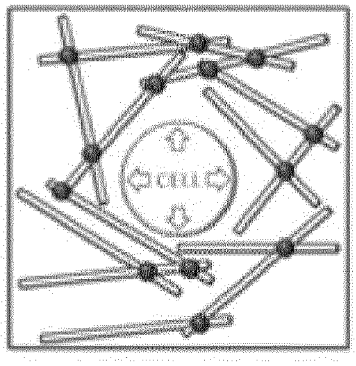


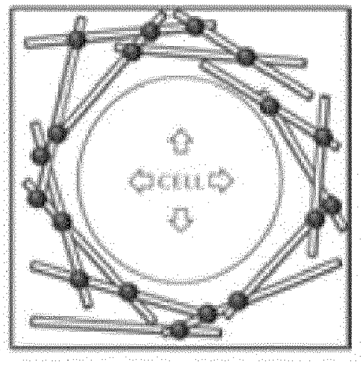


FIG. 3A

FIG. 3B

FIG. 3C

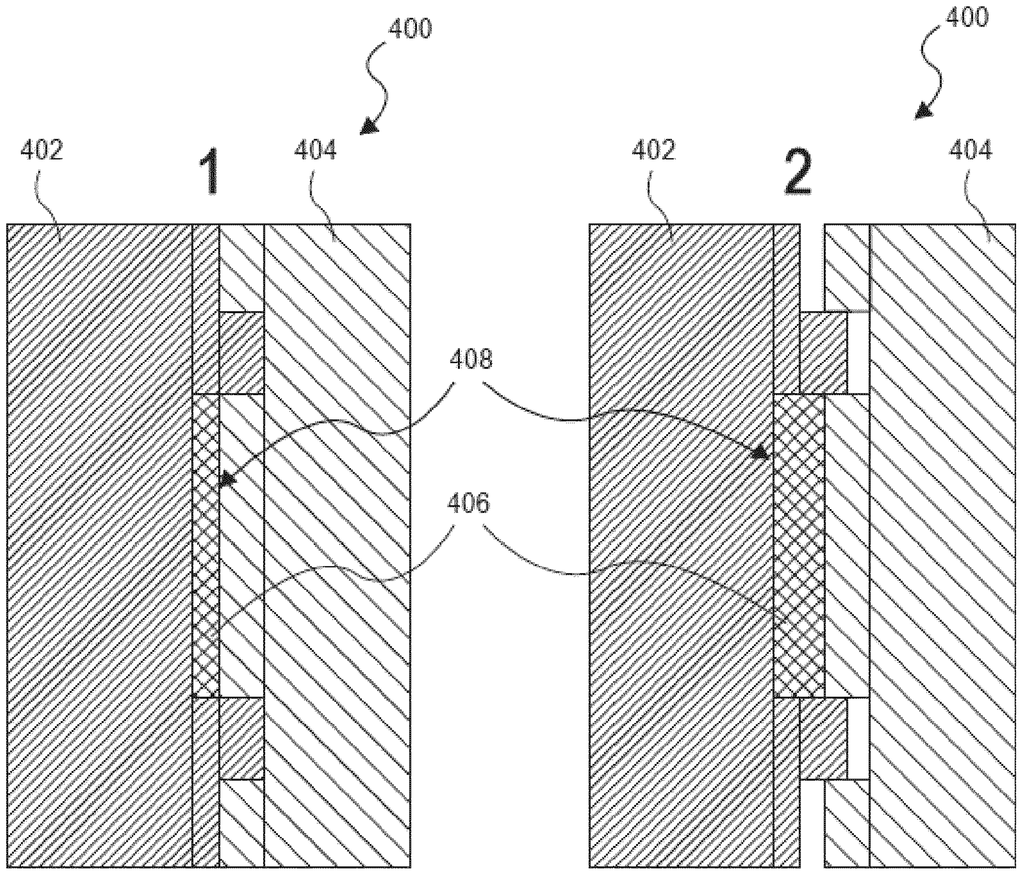


FIG. 4

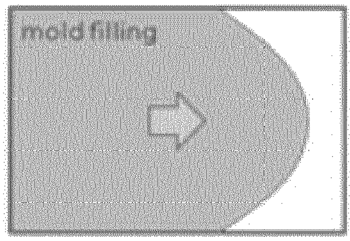


FIG. 5A

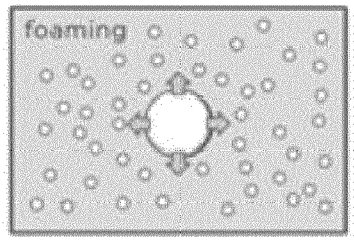


FIG. 5B

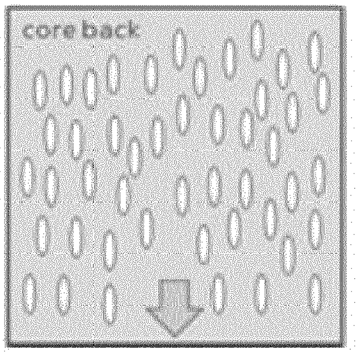


FIG. 5C

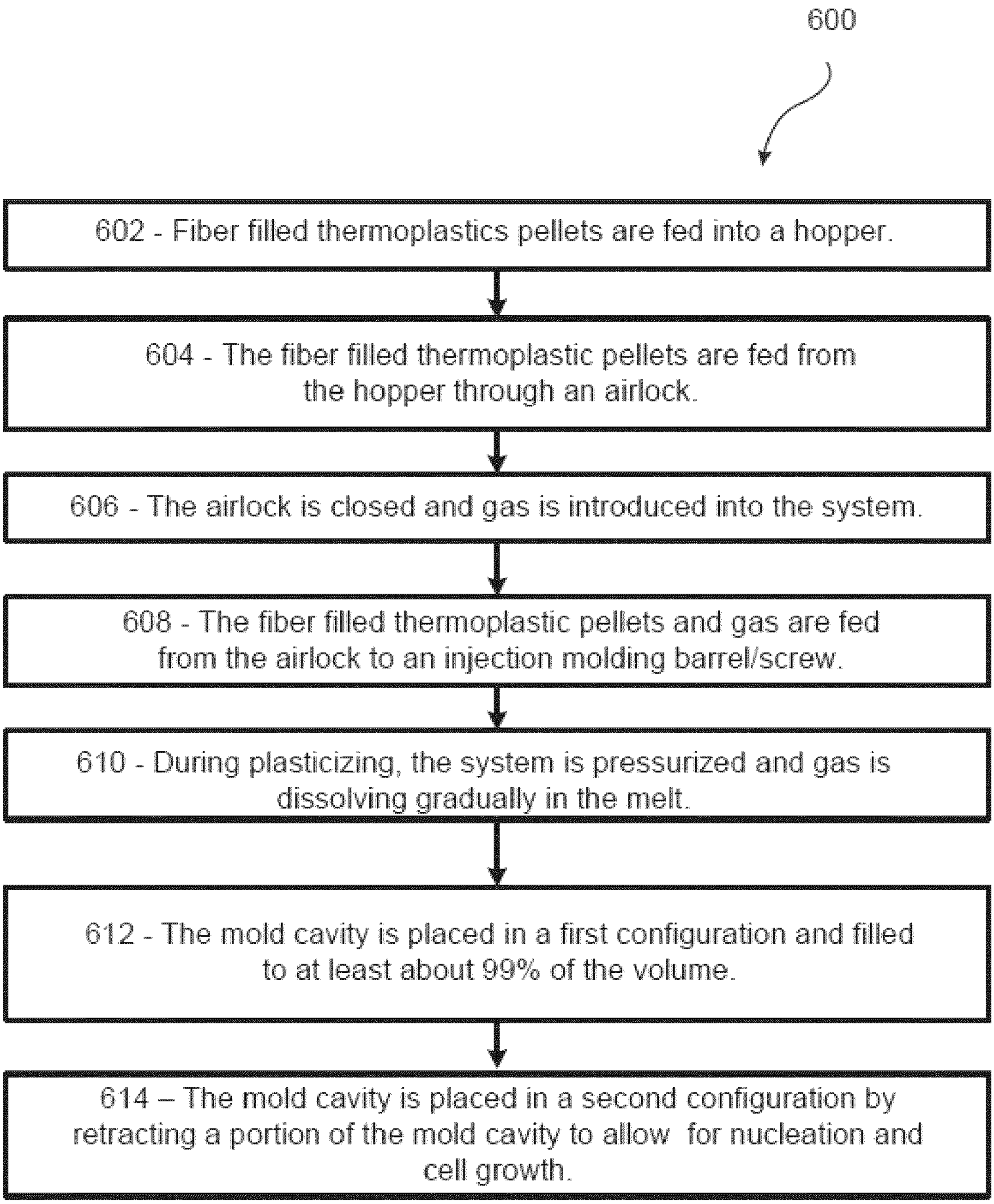
600
602 - Fiber filled thermoplastics pellets are fed into a hopper.
604 - The fiber filled thermoplastic pellets are fed from the hopper through an airlock.
606 - The airlock is closed and gas is introduced into the system.
608 - The fiber filled thermoplastic pellets and gas are fed from the airlock to an injection molding barrel/screw.
610 - During plasticizing, the system is pressurized and gas is dissolving gradually in the melt.
612 - The mold cavity is placed in a first configuration and filled to at least about 99% of the volume.
614 – The mold cavity is placed in a second configuration by retracting a portion of the mold cavity to allow for nucleation and cell growth.

FIG. 6

Table 2. Formulations of Samples S1-S8

| Formulation | #1 | #2 | #3 | #4 | #5 | #7 | #8 |
|---|---|---|---|---|---|---|---|
| PP578N-00900 (MFR 230 °C/2.16 kg = 25) | 75.00% | 50.00% | 75.00% | 50.00% | 40.00% | - | - |
| PP500P-00900 (MFR 230 °C/2.16 kg = 3) | - | - | - | - | - | 75.00% | 75.00% |
| Lotader™ AX8900 | - | - | - | - | 10.00% | - | - |
| Graphexel™ 2607 | - | - | 25.00% | 50.00% | 50.00% | - | 25.00% |
| Timrex™ 80x150 | 25.00% | 50.00% | - | - | - | 25.00% | - |
| Total | 100.00% | 100.00% | 100.00% | 100.00% | 100.00% | 100.00% | 100.00% |

FIG. 7

**Table 3.** Extrusion profile and compounding conditions.

| | | |
|---|---|---|
| Feed (Zone 0) Temp | °C | |
| Zone 1 Temp | °C | Not adjustable |
| Zone 2 Temp | °C | 150 |
| Zone 3 Temp | °C | 230 |
| Zone 4 Temp | °C | 230 |
| Zone 5 Temp | °C | 230 |
| Zone 6 Temp | °C | 230 |
| Zone 7 Temp | °C | 230 |
| Zone 8 Temp | °C | 230 |
| Zone 9 Temp | °C | 230 |
| Zone 10 Temp | °C | 230 |
| Zone 11 Temp | °C | 230 |
| Zone 12 Temp | °C | |
| Die Temp | °C | 230 |
| Screw speed | NA | 300 |
| Throughput | kg/hr | 30 |
| Torque | % | 45-70 |

**FIG. 8**

**Table 4.** Effect foam injection molding with core back on through-plane thermal conductivity and foam quality

| Sample | Composition | Description | Core Back ratio | Through-plane TC (W/mK) | TC improvement factor | Quality foam |
|---|---|---|---|---|---|---|
| 1-1 | #1 | High MFR PP + 25 wt% large graphite | 0% | 0.30 | | |
| 1-2 | | | 100% | 0.38 | 1.27 | 3.38 |
| 2-1 | #2 | High MFR PP + 50 wt% large graphite | 0% | 0.57 | | |
| 2-2 | | | 100% | 1.80 | 3.16 | 2.13 |
| 3-1 | #3 | High MFR PP + 25 wt% small graphite | 0% | 0.29 | | |
| 3-2 | | | 100% | 0.35 | 1.21 | 3.25 |
| 4-1 | #4 | High MFR PP + 50 wt% small graphite | 0% | 0.71 | | |
| 4-2 | | | 100% | 2.58 | 3.63 | 1.00 |
| 5-1 | #5 | High MFR PP + 50 wt% small graphite + compatibilizer | 0% | 0.75 | | |
| 5-2 | | | 100% | 2.47 | 3.29 | 1.50 |
| 6-1 | #6 | High MFR PP +45% small graphite + 1wt% pre-fibrillated PTFE | 0% | 0.53 | | |
| 6-2 | | | 33% | 0.71 | 1.34 | 3.50 |
| 6-3 | | | 50% | 0.86 | 1.62 | 3.50 |
| 6-4 | | | 66% | 0.99 | 1.87 | 3.75 |
| 6-5 | | | 100% | 1.28 | 2.42 | 3.13 |
| 7-1 | #7 | Low MFR PP + 25 wt% large graphite | 0% | 0.23 | | |
| 7-2 | | | 100% | 0.32 | 1.38 | 3.38 |
| 8-1 | #8 | Low MFR PP + 25 wt% small graphite | 0% | 0.24 | | |
| 8-2 | | | 100% | 0.29 | 1.24 | 3.00 |

FIG. 9

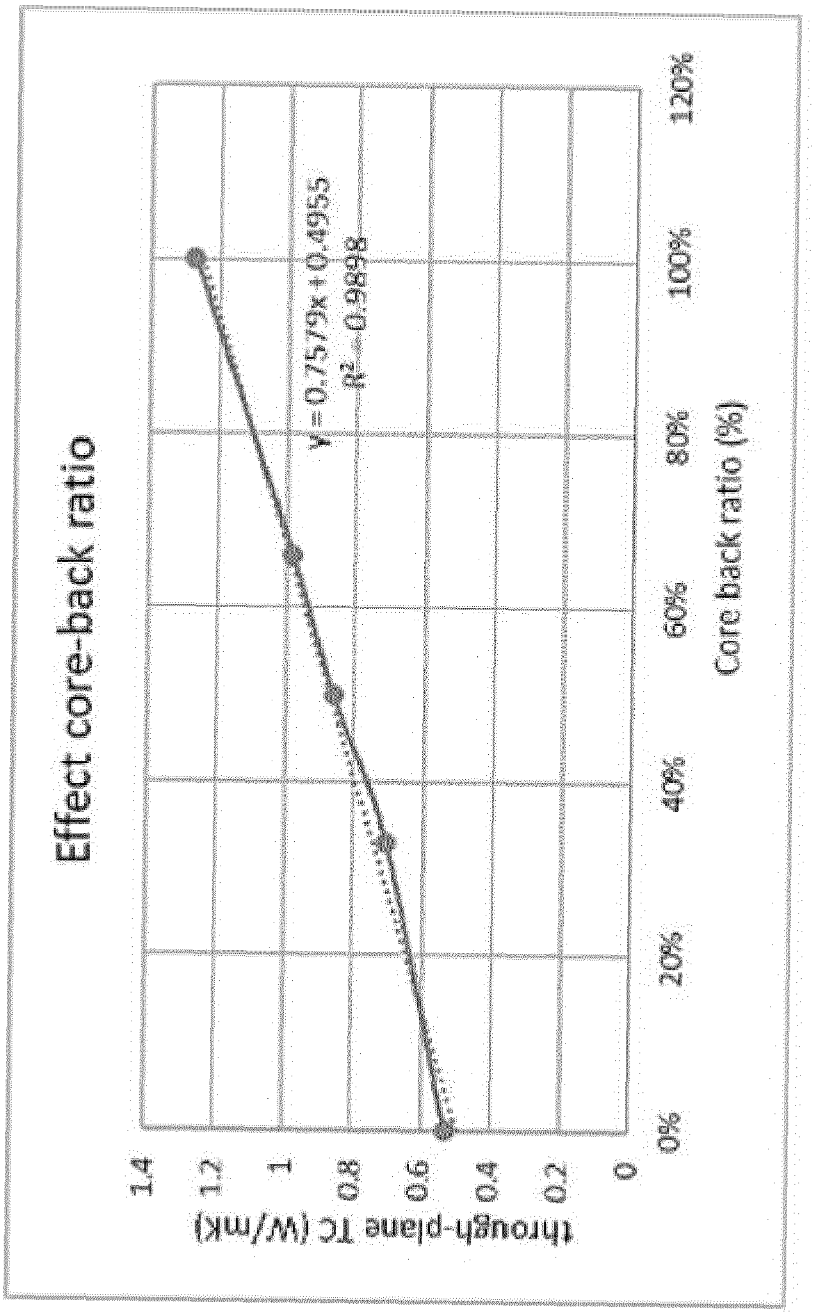
Effect core-back ratio
y = 0.7579x + 0.4955
R² = 0.9898
through-plane TC (W/mK)
1.4
1.2
1
0.8
0.6
0.4
0.2
0
0%
20%
40%
60%
80%
100%
120%
Core back ratio (%)

FIG. 10

Europäisches Patentamt
European Patent Office
Office européen des brevets

# EUROPEAN SEARCH REPORT

Application Number
EP 19 20 3067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/198283 A1 (SABIC GLOBAL TECHNOLOGIES BV [NL]) 30 December 2015 (2015-12-30) * [0064],; claims 1-20; table 1 * ----- | 1-13 | INV. C08K3/04 |
| A | WO 2018/130972 A1 (SABIC GLOBAL TECHNOLOGIES BV [NL]) 19 July 2018 (2018-07-19) * tables 1-3 * ----- | 1-13 | |

TECHNICAL FIELDS SEARCHED (IPC)
C08K

The present search report has been drawn up for all claims

1

| Place of search | Date of completion of the search | Examiner |
|---|---|---|
| Munich | 6 April 2020 | Scheid, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 20 3067

This annex lists the patent family members relating to the patent documents cited in the above-mentioned European search report. The members are as contained in the European Patent Office EDP file on
The European Patent Office is in no way liable for these particulars which are merely given for the purpose of information.

06-04-2020

| Patent document cited in search report | Publication date | Patent family member(s) | Publication date |
|---|---|---|---|
| WO 2015198283 A1 | 30-12-2015 | CN 106604967 A | 26-04-2017 |
| | | EP 3161055 A1 | 03-05-2017 |
| | | KR 20170007791 A | 20-01-2017 |
| | | US 2017183475 A1 | 29-06-2017 |
| | | WO 2015198283 A1 | 30-12-2015 |
| WO 2018130972 A1 | 19-07-2018 | CN 110300778 A | 01-10-2019 |
| | | EP 3568432 A1 | 20-11-2019 |
| | | KR 20190103272 A | 04-09-2019 |
| | | WO 2018130972 A1 | 19-07-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040039145 A1
- US 6723864 B
- US 3875116 A
- US 6919422 B
- US 6355723 B
- US 4690997 A
- US 4808686 A
- US 7041773 B
- WO 2018122747 A
- US 7557154 B


### Non-patent literature cited in the description


- **A. AMELI et al.** *CARBON,* 2014, vol. 71, 206-217